# FASCICULE DE BREVET EUROPEEN

(11) **EP 4 169 373 B1**
(45) Date de publication et mention de la délivrance du brevet: **20.05.2026**
(21) Numéro de dépôt: 22202474.7
(22) Date de dépôt: 19.10.2022
(51) Int. Cl.: A01F 29/00, A01F 29/18, A01K 5/00

(54) **MACHINE AGRICOLE DE DISTRIBUTION DE PRODUITS POUR L'ALIMENTATION DES ANIMAUX ET/OU LA FORMATION DE LEUR LITIÈRE**
LANDWIRTSCHAFTLICHE MASCHINE ZUR VERTEILUNG VON PRODUKTEN ZUR FÜTTERUNG VON TIEREN UND/ODER ZUR BILDUNG VON EINSTREU
AGRICULTURAL MACHINE FOR THE DISTRIBUTION OF PRODUCTS FOR THE FEEDING OF ANIMALS AND/OR THE FORMATION OF THEIR LITTER

(30) Priorité: 20.10.2021 FR 2111129
(43) Date de publication de la demande: 26.04.2023
(73) Titulaire: Kuhn-Audureau SAS, 85260 La Copechagnière (FR)
(72) Inventeur: ROGER, Christophe, 85000 LA ROCHE-SUR-YON (FR); GAUTRON, Pascal, 85250 SAINT-FULGENT (FR)
(74) Mandataire: Hager, Esther Evelyne

(56) Documents cités:
- EP-A2- 0 970 600
- EP-B1- 3 103 325
- DE-U1- 202010 015 055
- FR-A1- 2 627 946
- US-A1- 2011 112 688

## Description

La présente invention concerne le domaine agricole et notamment la distribution de produits pour l'alimentation des animaux et/ou la réalisation de leurs litières et a pour objet une machine agricole de distribution de produits pour l'alimentation des animaux et/ou la formation de leur litière.

On connait déjà des machines agricoles de distribution de produits permettant d'alimenter les animaux en distribuant des produits tels que du foin ou de l'ensilage ou pour former leur litière en distribuant des produits tels que de la paille.

Ces machines agricoles de distribution, également connues sous le nom de pailleuses , sont conçues pour recevoir les produits sous forme de balles cubiques ou cylindrique ou en vrac et pour distribuer les produits en les projetant à distance de la machine sur les zones de distributions.

Une telle machine agricole de distribution comprend à cet effet un caisson (ou benne) recevant les produits, généralement par son côté arrière et une turbine de distribution disposée sur un côté du caisson, généralement au niveau du côté avant du caisson. La turbine comprend un carter entourant un espace de projection et comportant une ouverture d'entrée communiquant avec l'espace interne du caisson pour permettre le passage des produits depuis le caisson jusque dans l'espace de projection et une ouverture de sortie se prolongeant par une goulotte d'éjection.

La turbine comprend en outre un organe rotatif, également appelé plateau de turbine par certains utilisateurs, monté dans l'espace de projection et un arbre d'entraînement permettant d'entraîner en rotation à grande vitesse l'organe rotatif autour d'un axe de rotation s'étendant horizontalement et/ou parallèlement à la direction d'avance de la machine. L'organe rotatif comprend des pales s'étendant sensiblement radialement.

Le caisson est en outre équipé d'un convoyeur, situé au niveau du plancher du caisson, permettant d'acheminer les produits déversés dans le caisson jusque dans l'espace de projection. Généralement le convoyeur est associé à un démêleur se présentant sous la forme d'un tambour situé devant l'ouverture d'entrée dans l'espace de projection de sorte à pouvoir acheminer les produits dans ce dernier avec une alimentation plus homogène et un flux plus régulier.

D'autre part, ces machines agricoles sont pourvues d'un boitier de transmission et/ou de vitesse, connu également sous le nom de boîtier de distribution, fixé sur la face avant du carter de projection. Un tel boîtier de transmission et/ou de vitesse permet de transmettre, ou convertir, le mouvement de rotation d'un arbre moteur, tel qu'un arbre de prise de force d'un véhicule tracteur, à l'arbre d'entraînement. D'autre machines agricoles comprennent leur propre moteur d'entraînement de l'arbre d'entraînement de la turbine de sorte que ce dernier n'a pas besoin dans ce cas d'être relié à un arbre de prise de force d'un tracteur pour pouvoir l'entraîner en rotation.

En fonctionnement, dans un premier temps, les produits sont chargés dans le caisson de la machine puis acheminés par le convoyeur via le tambour démêleur jusqu'aux pales de l'organe rotatif dans l'espace de projection qui génèrent dans ce dernier un flux d'air entraînant, avec le mouvement des pales à grande vitesse, les produits vers l'ouverture de sortie du carter en les projetant dans la goulotte. Puis les produits, guidés par la goulotte, sont éjectés de la machine par une sortie de la goulotte en formant un jet de matière dirigé, suivant l'orientation de la goulotte généralement réglable, vers le sol pour former la litière des animaux ou vers des auges pour leur alimentation.

Une telle machine de distribution est, par exemple, décrite et illustrée dans le document EP3103325B1, le document DE202010015055U1 ou dans le document FR2627946A1.

L'utilisateur peut réaliser depuis son poste de conduite différents réglages/interventions tout en conduisant pour éviter (au maximum) les bourrages et avoir le bon débit de sortie/projection de la matière à la sortie de la goulotte, par exemple en intervenant sur le démêleur, la vitesse d'avancement du convoyeur ou l'ouverture d'alimentation de la turbine.

Toutefois, ces machines de distribution posent plusieurs problèmes et notamment des problèmes de bourrage et de sécurité. En effet, les différents réglages ne sont pas toujours suffisants pour éviter ou réduire davantage les bourrages, par exemple dans le cas où les produits présentent une densité ou une compacité excessive ou trop importante. Ces bourrages nécessitent alors une intervention longue (de 1 à 2h) de l'utilisateur, ce qui est contraignant pour celui-ci et entraîne une interruption du travail de la machine. D'autre part, lorsque l'organe rotatif de la turbine n'est pas complètement arrêté, l'utilisateur peut être amené, par exemple à la suite d'un problème de bourrage, à intervenir dans l'espace de projection de la machine dans lequel il peut être blessé par les pales dudit organe rotatif encore en mouvement.

La présente invention a pour but de pallier ces inconvénients.

Dans ce but, la présente invention a pour objet une machine agricole de distribution de produits pour l'alimentation des animaux et/ou la formation de leur litière selon la revendication 1.

La présente invention a également pour objet un ensemble machine agricole de distribution et véhicule tracteur selon la revendication 11.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en coupe longitudinale d'une machine agricole de distribution selon la présente invention, dans un mode de réalisation particulier,
Fig. 2] est une vue en perspective de la partie avant de la machine agricole de distribution représentée sur la figure 1,
[Fig. 3] montre la machine agricole de distribution telle que représentée sur la figure 2 avec un capteur de détection associé à l'indicateur rotatif pour former les moyens de détection des données liées à la rotation de l'organe rotatif de la turbine,
[Fig. 4] montre le boîtier de transmission et/ou de vitesse de la figure 3, selon une vue en coupe,
[Fig. 5] représente un schéma bloc du système de contrôle et d'acquisition de données dans un mode de réalisation particulier de la machine comprenant un tel système.

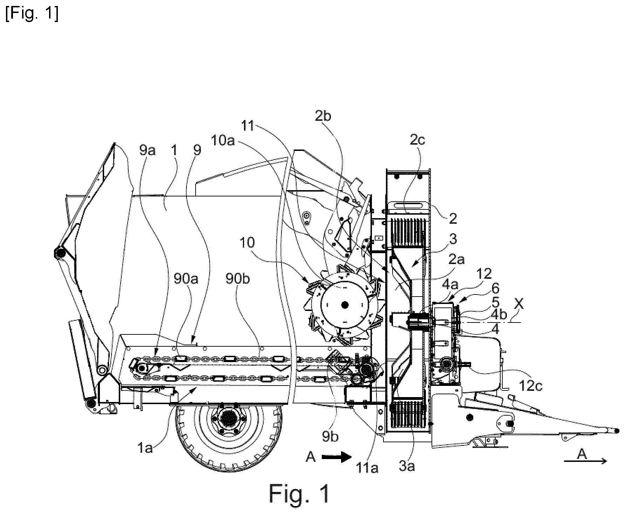

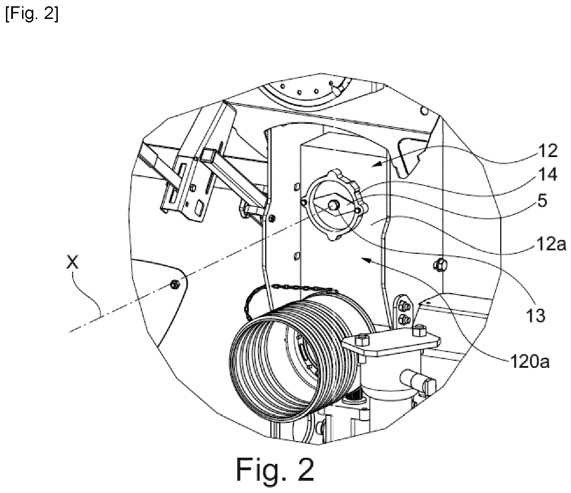

La figure 1 et partiellement les figures 2 à 4, montrent une machine agricole de distribution de produits pour l'alimentation des animaux et/ou la formation de leur litière, la machine comprenant :
- un caisson 1 délimitant intérieurement un espace de réception des produits,
- une turbine comprenant, d'une part, un carter 2 disposé sur un côté du caisson 1, plus particulièrement le côté avant (selon la direction d'avance A de la machine) du caisson 1, et entourant un espace de réception 2a des produits, le carter 2 comportant une ouverture d'entrée 2b communiquant avec l'espace de réception 2a et une ouverture de sortie 2c et, d'autre part, un organe rotatif 3 muni de pales 3a et monté en rotation autour d'un axe de rotation X dans l'espace de projection 2a de sorte à pouvoir générer dans ce dernier un flux d'air entraînant, avec le mouvement des pales 3a, les produits vers l'ouverture de sortie 2c,
- un arbre d'entraînement 4 de l'organe rotatif 3,
- un système convoyeur et/ou démêleur 9, 10 permettant d'acheminer les produits depuis l'espace de réception jusque dans l'espace de projection 2a,
- et, éventuellement un moyen d'ouverture/fermeture 11 de l'ouverture d'entrée 2b.

Conformément à la présente invention, une telle machine comprend un indicateur rotatif 5 disposé en dehors de l'espace de projection 2a en étant apte à être entraîné en rotation, directement ou indirectement, par l'arbre d'entraînement 4 de sorte à transmettre à un utilisateur, par son propre effet visuel de rotation, une indication visuelle sur la rotation de l'organe rotatif 3.

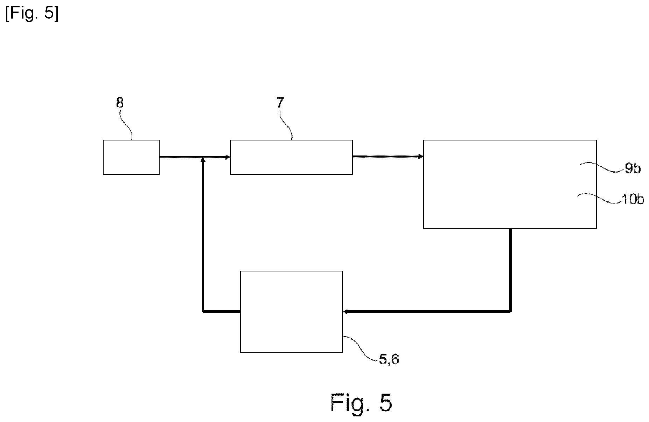

La présente invention comprend en outre un système de contrôle et d'acquisition de données 5, 6, 7, 8 liées à la rotation de l'organe rotatif 3 (voir la figure 5).

D'une manière générale lors du fonctionnement d'une machine, les organes mécaniques entraînés en rotation sont protégés par une enveloppe de protection. De tels organes mécaniques sont par exemple un organe rotatif, un arbre d'entraînement, un boitier de transmission et/ou de vitesse. L'enveloppe de protection a une fonction d'isolation par l'extérieur pour limiter l'accessibilité aux organes mécaniques en mouvement et donc à la zone dangereuse. Une enveloppe de protection se présente sous la forme d'un carter en plastique, en tôle ou en fonte. En fonctionnement normal (enveloppe de protection fermée), la rotation de l'arbre d'entraînement et de l'organe rotatif est occulté par l'enveloppe de protection. Dans certains cas, l'enveloppe est fermée de façon étanche puisqu'elle contient le lubrifiant nécessaire au fonctionnement des organes mécaniques.

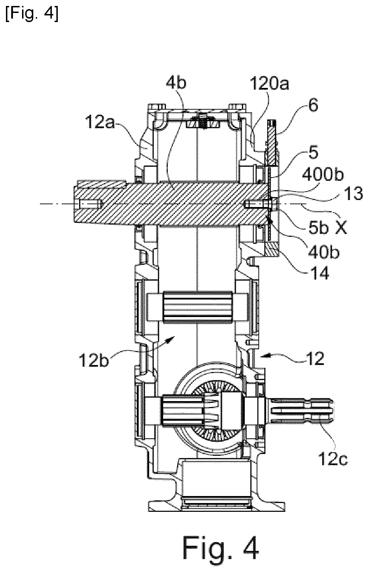

De préférence, l'indicateur rotatif 5 est apte à être entraîné en rotation autour de l'axe de rotation X. En outre, l'indicateur rotatif 5 est positionné et configuré de manière à être visible depuis l'extérieur de la machine. Les axes de rotation X de l'arbre d'entraînement 4 et de l'organe rotatif 3 sont préférentiellement confondus (ou alignés). On comprend, comme on peut le voir notamment sur les figures 1 et 4, que les axes de rotation X de l'arbre d'entraînement 4, de l'organe rotatif 3 et de l'indicateur rotatif 5 peuvent être préférentiellement confondus (ou alignés).

Toujours conformément à la présente invention, dans le cas où une telle machine agricole de distribution comprend le système de contrôle et d'acquisition de données 5, 6, 7, 8, celui-ci comprend une interface de communication 8, des moyens de détection aptes à détecter les données et à délivrer des signaux représentatifs des données et une unité de contrôle 7 électronique apte à traiter les signaux et à transmettre à la interface de communication 8 des informations relatives aux données pour les afficher de façon visuelle et/ou les restituer de façon sonore et/ou apte à traiter les signaux selon un programme de traitement spécifique permettant de déterminer si les données détectées sont représentatives d'un fonctionnement normal ou anormal de la turbine , plus particulièrement de l'organe rotatif 3.

Grâce au système de contrôle et d'acquisition de données 5, 6, 7, 8, l'opération de distribution pourra être rendue plus facile en réduisant l'intervention manuelle de l'utilisateur sur la commande respective du/des actionneur(s) qui commande(nt) l'organe rotatif 3, le système de convoyeur et/ou démêleur 9, 10 et, le cas échéant, le moyen d'ouverture/fermeture 11. L'utilisateur pourra se concentrer sur l'orientation de la goulotte en sortie de la turbine dans le cas où la machine agricole comprend une telle goulotte de manière connue et sur la conduite du véhicule tracteur. D'une manière particulièrement intéressante, en équipant les différents organes en rotation/mouvement (système de convoyeur et/ou démêleur 9, 10 et, le cas échéant, le moyen d'ouverture/fermeture 11) avec au moins un moyen de mesure, il sera possible d'automatiser les réglages pour obtenir un débit de matière déterminé en fonction du régime de l'organe rotatif 3 ou en fonction de la vitesse d'avance de la machine agricole de distribution. Pour cela, la présente invention peut prévoir un capteur de vitesse de déplacement configuré pour détecter la vitesse à laquelle la machine agricole de distribution se déplace sur le sol, le capteur pouvant être associé à une roue du caisson 1 ou à une roue du véhicule tracteur par exemple. En équipant encore le caisson 1 d'un système de pesée avec des pesons, il est alors possible via le système de contrôle et d'acquisition de données d'améliorer la régularité du débit de matière/produit déchiqueté à travers la goulotte de la machine agricole de distribution.

Dans un mode de réalisation préférentiel, comme on peut le voir sur les figures 1, 2, 3 et 4, l'indicateur rotatif 5 est fixé sur l'arbre d'entraînement 4 de sorte à être entraîné en rotation autour de l'axe de rotation X solidairement avec ce dernier, de préférence en étant centré sur l'axe de rotation X. De préférence, l'indicateur rotatif 5 est fixé sur l'une des extrémités de l'arbre d'entraînement 4, dite extrémité de fixation (figures 1, 2, 3 et 4). Ceci a pour effet/avantage d'obtenir directement l'information de rotation de l'organe rotatif 3 qui est entrainé par l'arbre d'entraînement 4. La distribution de matière est régulière lorsque l'organe rotatif 3 tourne à sa vitesse de fonctionnement requise ou à son régime déterminé. Cette indication de rotation permet à l'utilisateur de vérifier le fonctionnement de la turbine, plus particulièrement de l'organe rotatif 3, et d'intervenir le cas échéant par exemple sur le système convoyeur 9 pour arrêter voire ralentir l'alimentation de la turbine et/ou du démêleur 10. Une intervention rapide limite le risque de bourrage dans l'espace de projection 2a de la machine et donc un arrêt pour intervention. Grâce à cette indication, l'utilisateur peut intervenir de manière anticipée, dès qu'un ralentissement de rotation de l'organe rotatif 3 est détecté. L'alimentation en produit de l'espace de projection 2a de la turbine se fait, de préférence, uniquement lorsque l'organe rotatif 3 a atteint sa vitesse de fonctionnement requise après son démarrage. Du fait de son inertie, l'organe rotatif 3 continue à tourner après l'arrêt de la rotation de l'arbre d'entraînement 4. Grâce à l'indicateur rotatif 5, l'utilisateur dispose de l'information de rotation ou non de l'arbre d'entraînement 4 et donc de l'organe rotatif 3 et saura quand il pourra intervenir sans danger, lorsque le l'organe rotatif 3 est arrêté.

Une telle machine agricole peut comprendre, de manière connue, un boîtier de transmission et/ou de vitesse 12. Un tel boîtier de transmission et/ou de vitesse 12 permet de transmettre, ou convertir, le mouvement de rotation d'un arbre moteur, tel que, par exemple, un arbre de prise de force d'un véhicule tracteur par exemple, à l'arbre d'entraînement 4. En outre, l'indicateur rotatif 5 peut être disposé au niveau d'un tel boîtier de transmission et/ou de vitesse 12 en étant visible depuis l'extérieur de ce dernier. Plus particulièrement, l'indicateur rotatif 5 est disposé, comme on peut le voir sur les figures 1, 2, 3 et 4 au niveau de l'une des parois 120a du boîtier de transmission et/ou de vitesse 12.

Un tel boîtier de transmission et/ou de vitesse 12 comporte, de manière connue, un boîtier 12a renfermant une transmission 12b. Il comprend en outre un arbre d'entrée 12c apte et destiné à être relié à un arbre moteur et à la transmission 12a. Le boîtier 12a, qui présente usuellement une forme parallélépipédique rectangle, comporte des parois 120a délimitant l'espace interne contenant la transmission 12b. L'une des parois 120a est tournée vers l'avant (dans la direction d'avance A de la machine) et l'indicateur rotatif 5 peut être disposé au niveau de ladite paroi avant (figures 1, 2, 3, 4). En outre, le boîtier 12a est disposé à l'avant de la machine (devant le carter 2 de projection), ce qui permet à l'indicateur rotatif 5 d'être aisément visible, par exemple, depuis la cabine du véhicule tracteur relié à la machine agricole de distribution. En variante, l'indicateur rotatif 5 est déporté pour être dans le champ de vision de l'utilisateur de la machine de distribution, lorsqu'il surveille le jet de matière en sortie de turbine. L'indicateur rotatif 5 est, par exemple, positionné de sorte à se trouver à hauteur des yeux de l'utilisateur (en considérant un utilisateur de taille moyenne) lorsqu'il est assis dans le véhicule tracteur.

D'autre part, dans une forme préférentielle, l'arbre d'entraînement 4 comprend une première partie 4a reliée à l'organe rotatif 3 et une deuxième partie 4b comportant l'extrémité de fixation 40b de l'indicateur rotatif 5. En outre, le boîtier de transmission et/ou de vitesse 12 comprend un arbre de sortie formant la deuxième partie 4b de l'arbre d'entraînement 4 (voir notamment les figures 1 et 2). L'extrémité de fixation 40b comprend un taraudage central 400b permettant de fixer l'indicateur rotatif 5 par vissage au moyen d'une vis 13 vissée dans le taraudage central 400b, ce qui permet le centrage de l'indicateur rotatif 5 sur l'arbre de sortie 4b et donc sur l'arbre d'entraînement 4. Le serrage de la vis 13 suffit à arrêter/bloquer en rotation l'indicateur rotatif 5 par rapport à l'arbre d'entraînement 4. Selon une variante, d'autre moyens de fixation permettant la fixation de l'indicateur rotatif 5 sur l'arbre d'entraînement 4 peuvent être envisagés tels qu'une fixation par collage ou soudage ou tout autre type de fixation permettant de fixer de manière durable ou démontable l'indicateur rotatif 5 sur l'arbre d'entraînement 4, plus particulièrement à l'une de ses extrémités.

Les dimensions de l'indicateur rotatif 5 sont déterminées de sorte à être suffisantes pour que celui-ci dépasse ou s'étende latéralement au-delà de l'arbre d'entraînement 4 afin de pouvoir être rendu visible ou mieux visible par son effet de rotation ou pour pouvoir être détecté comme cela sera décrit par la suite par un capteur.

Dans une forme particulière (non représentée sur les figures), l'indicateur rotatif 5 présente une forme de disque comportant deux faces opposées dont l'une est visible de l'utilisateur et présente au moins deux marques distinctes, par exemple deux couleurs différentes (par exemple rouge/blanc). Les deux marques ou plus permettent à l'utilisateur de visualiser la rotation du disque et par conséquent de surveiller sa vitesse/son régime.

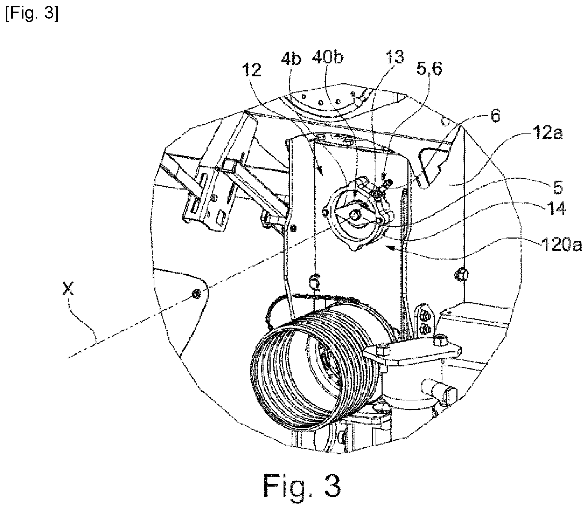

Dans d'autres formes particulières, l"indicateur rotatif 5 présente une forme oblongue, ovale, non ronde, allongée, de losange, d'étoile ou d'aiguille. Si on se réfère plus particulièrement aux figures 2 et 3, on peut voir un tel indicateur rotatif 5 en forme de losange. Une telle forme de losange peut également être définie comme étant allongée, non ronde ou en forme d'aiguille plate. De telles formes, non limitatives, ont pour effet/avantage de permettre à l'utilisateur de visualiser et la rotation de l'indicateur rotatif 5 et sa vitesse de rotation.

De préférence, l'indicateur rotatif 5 est situé derrière un écran de protection transparent du type plexiglass ou vitre.

De préférence, l'indicateur rotatif 5 s'étend sensiblement perpendiculairement à l'axe de rotation X.

De préférence, l'axe de rotation X peut s'étendre sensiblement horizontalement et/ou sensiblement parallèlement à la direction d'avance A de la machine.

L'indicateur rotatif 5 peut être monté directement sur l'arbre d'entraînement 4 (que ce dernier soit formé en une ou plusieurs parties 4a, 4b comme vu précédemment) ou indirectement par l'intermédiaire d'une liaison. Une telle liaison peut être formée par l'arbre de sortie par exemple. Dans ce dernier cas, on comprend que, selon une autre définition ou interprétation de l'arbre d'entraînement 4 que celle mentionnée plus haut comprenant deux parties 4a, 4b dont l'une est formée par l'arbre de sortie, l'arbre de sortie n'est pas considéré comme faisant partie de l'arbre d'entraînement 4 mais comme étant lié à ce dernier en formant la liaison entre l'indicateur rotatif 5 et l'arbre d'entraînement 4.

L'utilisateur peut ainsi, en observant la rotation d'un tel indicateur rotatif 5 et sa vitesse de rotation, distinguer une variation ou un changement de vitesse/régime de ce dernier, par exemple un ralentissement, représentatif d'un changement de vitesse/régime de l'organe rotatif 3 ou le fait que l'organe rotatif 3 n'est pas complètement arrêté.

Lorsque la machine agricole comprend le système de contrôle et d'acquisition de données 5, 6, 7, 8, les moyens de détection comprennent au moins un capteur 6 inductif, optique ou capacitif et au moins un indicateur rotatif 5 tel qu'une cible apte à être détectée par le capteur et étant fixée sur ou intégrée dans ou formée par l'organe rotatif 3 ou l'arbre d'entraînement 4 ou l'indicateur rotatif 5. On comprend que le capteur 6 est disposé par rapport à la cible de sorte à pouvoir détecter, dans son rayon ou champ de détection, son passage lors de la rotation de l'organe rotatif 3, de l'arbre d'entraînement 4 ou de l'indicateur rotatif 5. Lorsque la cible est fixée sur ou intégrée dans l'organe rotatif 3 ou l'arbre d'entraînement 4 ou l'indicateur rotatif 5, celle-ci peut être un insert, par exemple métallique, permettant sa détection par le capteur, par exemple du type inductif ou capacitif.

Sur les figures 1, 3 et 4, on peut voir que, dans une forme de réalisation préférentielle des moyens de détection, l'indicateur rotatif 5 forme la cible du capteur 6. Plus particulièrement, on peut voir que ce sont les extrémités de l'indicateur rotatif 5, par exemple en forme de losange, qui passent alternativement à proximité du capteur 6 en étant détectées par ce dernier. On comprend alors que le capteur 6 est positionné de sorte à être proche du passage de l'indicateur rotatif 5 et plus particulièrement le cas échéant d'une extrémité de ce dernier pour pouvoir détecter ce dernier.

De préférence, le capteur 6 est disposé radialement ou axialement par rapport à l'indicateur rotatif 5 ou la cible concernée formé par un autre élément.

La présente invention peut prévoir une forme de réalisation où la cible est une couleur et le capteur 6, par exemple du type capteur optique, est apte à détecter la couleur lors du passage de la cible dans son champ de détection. La cible couleur peut être par exemple une partie de couleur de l'indicateur rotatif 5 ou de l'organe rotatif 3 ou l'arbre d'entraînement 4 ou d'un élément rapporté sur ces derniers.

Ainsi, dans le cas où la machine comprend un tel indicateur rotatif 5 formant la cible des moyens de détection, même si l'indicateur rotatif 5 est caché/occulté par un équipement, par exemple une trémie mélangeuse, l'utilisateur dispose quand même de l'information de rotation donnée par les moyens de détection et représentative de la rotation de l'organe rotatif 3. Il en est de même dans le cas où la machine agricole utilise/comprend un tel système de contrôle et d'acquisition de données (forme non représentée sur les figures annexées) sans un tel indicateur rotatif 5 mais une cible solidaire (c'est-à-dire fixée sur ou intégrée dans ou formée par) de l'organe rotatif 3 ou de l'arbre d'entraînement 4 ou de tout autre élément ou organe de la machine lié directement ou indirectement à la rotation de l'organe rotatif 3.

Ainsi, la présente invention prévoit un mode de réalisation utilisant seulement un tel indicateur rotatif 5, c'est-à-dire sans utiliser un tel système de contrôle et d'acquisition de données 5, 6, 7, 8. Dans ce mode l'utilisateur reçoit une information sur la rotation de l'organe rotatif 3 en visualisant/observant directement la rotation de l'indicateur rotatif 5 par son propre effet (visuel) de rotation.

L'invention prévoit également un mode de réalisation avec un système de contrôle et d'acquisition de données 5, 6, 7, 8. Selon la représentation de la figure 3, avec un indicateur rotatif 5 utilisé en tant que tel pour être visualisé directement par l'utilisateur et/ou en tant que cible des moyens de détection du système. Dans ce mode, l'utilisateur peut recevoir une information visuelle sur la rotation de l'organe rotatif 3 en visualisant/observant directement la rotation de l'indicateur rotatif 5 et/ou une information visuelle et/ou sonore sur la rotation de l'organe rotatif 3 provenant de la détection de données liées à la rotation de ce dernier par les moyens de détection du système.

Il serait aussi possible de prévoir un système de contrôle et d'acquisition de données 5, 6, 7, 8 sans utilisation d'un indicateur de rotation 5. Ici l'utilisateur peut recevoir une information visuelle et/ou sonore sur la rotation de l'organe rotatif 3 provenant de la détection de données liées à la rotation de ce dernier par les moyens de détection du système.

L'utilisation d'un tel indicateur rotatif 5 et/ou d'un tel système de contrôle et d'acquisition de données 5, 6, 7, 8 avec ou sans l'indicateur rotatif 5 permet ainsi de prévenir le risque d'un problème entraînant un fonctionnement anormal de la turbine, plus particulièrement de l'organe rotatif 3, par exemple un problème de bourrage des produits ou un arrêt non réalisé de l'organe rotatif 3 du fait de l'inertie de ses pales 3a en mouvement de rotation. Par exemple, en suivant visuellement la vitesse de rotation de l'indicateur rotatif 5 ou en visualisant des informations relatives aux données sur un afficheur et/ou restituées par un moyen sonore, l'utilisateur pourra détecter un changement de vitesse anormal de la rotation de l'indicateur rotatif 5, par exemple un ralentissement dû à un problème de bourrage, et pourra alors intervenir (plus rapidement), par exemple sur le système convoyeur et/ou démêleur 9, 10 et/ou le moyen d'ouverture/fermeture 11. L'utilisateur pourra aussi détecter que l'organe rotatif 3 n'est pas complètement arrêté et éviter alors de se blesser par les pales 3a encore en mouvement.

De préférence, dans le cas où la machine agricole comprend l'interface de communication 8, celle-ci peut comprendre au moins un écran tactile permettant d'afficher de façon visuelle les informations liées aux données détectées et/ou au traitement spécifique et, permettant, éventuellement avec un dispositif pointeur associé, une interaction entre l'utilisateur et le système de contrôle et d'acquisition de données 5, 6, 7, 8.

Dans le cas où les données détectées sont représentatives d'un fonctionnement anormal de la turbine, plus particulièrement de l'organe rotatif 3, par exemple un bourrage par des produits, le système de contrôle et d'acquisition de données 5, 6, 7, 8 peut être configuré pour pouvoir commander le système convoyeur et/ou démêleur 9, 10 et/ou, le cas échéant, le moyen d'ouverture/fermeture 11 jusqu'à ce que les données détectées soient représentatives d'un fonctionnement normal de la turbine 3, plus particulièrement de l'organe rotatif 3. Dans le cas où, sur une durée prédéterminée, aucune donnée détectée n'est représentative d'un fonctionnement normal, c'est-à-dire que la commande du système convoyeur et/ou démêleur 9, 10 et/ou, le cas échéant, du moyen d'ouverture/fermeture 11, n'a/ont pas permis la résolution du problème, par exemple du bourrage, le système de contrôle et d'acquisition de données 5, 6, 7, 8 peut être configuré pour arrêter la commande du système convoyeur et/ou démêleur 9, 10 et/ou, le cas échéant, du moyen d'ouverture/fermeture 11.

Si on se réfère notamment à la figure 1, on peut voir que le système convoyeur et/ou démêleur 9, 10 peut comprendre, de manière connue, un moyen convoyeur 9 comprenant un convoyeur 9a et un actionneur 9b du type moteur électrique par exemple permettant de déplacer le convoyeur 9a. Le convoyeur 9a peut être disposé sur le plancher 1a du caisson 1 ou former une partie du plancher 1a et peut être composé de barres transversales 90a entraînées par des chaînes 90b elles-mêmes entraînées par l'actionneur 9b. Le système convoyeur et/ou démêleur 9, 10 peut comprendre en outre un moyen démêleur 10 comprenant un tambour démêleur rotatif 10a situé devant l'ouverture d'entrée 2b et au-dessus du convoyeur 9, et un actionneur 10b du type moteur électrique, hydraulique ou par entraînement mécanique du type poulie/courroie par exemple permettant d'actionner la rotation du tambour démêleur 10a autour de son axe. Ainsi le convoyeur 9a permet d'acheminer les produits entrant dans le caisson 1 jusqu'au tambour démêleur rotatif 10a qui les achemine dans un état adapté (démêlé) pour leur projection dans l'espace de projection 2a par l'organe rotatif 3 en rotation.

De manière connue, le tambour démêleur 10a peut être équipé de couteaux ou éléments de coupe pour déchiqueter les matières fibreuses et permettre une alimentation homogène et régulière de la turbine. Les matières fibreuses, par exemple de la paille ou du foin, sont conditionnées en balles cylindriques ou bottes parallélépipédiques. Elles sont destinées à être chargées dans le caisson 1 de la machine agricole de distribution.

Le moyen d'ouverture/fermeture 11 peut comprendre, de manière connue, un élément de fermeture du type volet 11a et un actionneur du type moteur (ou vérin) permettant d'entraîner le déplacement du volet de sorte à ouvrir ou fermer, partiellement ou entièrement, l'ouverture d'entrée 2b des produits.

Ainsi, pour réaliser la commande du système convoyeur et/ou démêleur 9, 10 et/ou, le cas échéant, du moyen d'ouverture/fermeture 11, l'unité de contrôle 7 peut être reliée fonctionnellement, par exemple par liaison filaire, aux actionneurs 9b, 10b de ces derniers et être configuré pour commander chaque actionneur 9b dans un état de marche ou d'arrêt. L'unité de contrôle 7 peut commander les actionneurs 9b, 10b de sorte à modifier au moins un paramètre du système convoyeur et/ou démêleur 9, 10 tel que la vitesse, le sens de déplacement ou la mise en marche/arrêt et/ou de sorte à modifier l'état du moyen d'ouverture/fermeture 11 pour régler l'amplitude de l'ouverture d'entrée 2b dans l'espace de projection 2a. Plus particulièrement, pour ce qui concerne le système convoyeur et/ou démêleur 9, 10 dans sa forme particulière illustrée sur la figure 1, les paramètres peuvent être la vitesse de déplacement (ou de rotation) et/ou le sens de déplacement (ou de rotation) et/ou la mise en marche/arrêt du convoyeur 9a et/ou du tambour démêleur rotatif 10a. Pour ce qui concerne la forme particulière du moyen d'ouverture/fermeture 11, un paramètre peut être la position de fermeture/ouverture du volet 11a.

On comprend que la commande du système convoyeur et/ou démêleur 9, 10 et/ou, le cas échéant, du moyen d'ouverture/fermeture 11, consiste, pour le système de contrôle et d'acquisition de données 5, 6, 7, 8, via l'unité de contrôle 7, à commander le système convoyeur et/ou démêleur 9, 10 et/ou, le cas échéant, le moyen d'ouverture/fermeture 11, selon des séquences d'actionnement prédéterminées en fonction du problème que veut résoudre l'utilisateur et qui entraîne un fonctionnement anormal, par exemple le problème de bourrage. De telles séquences d'actionnement peuvent consister, par exemple, notamment pour répondre à un problème de bourrage entraînant plus particulièrement une décélération plus ou moins importante du système convoyeur et/ou démêleur 9, 10, à commander :
- un ralentissement (réduction de la vitesse) du système convoyeur et/ou démêleur 9, 10 (dans sa forme particulière : une réduction de la vitesse du convoyeur 9a et/ou du tambour démêleur rotatif 10a), notamment lors de la détection d'une faible décélération de l'organe rotatif 3, et/ou
- un arrêt du système convoyeur et/ou démêleur 9, 10, notamment lors d'une décélération brusque de l'organe rotatif 3, et/ou
- une inversion du sens de déplacement du système convoyeur et/ou démêleur 9, 10 (dans sa forme particulière : inversion du sens de déplacement ou marche arrière du convoyeur 9a et/ou inversion du sens de rotation du tambour démêleur rotatif 10a), notamment lors d'une décélération brusque de l'organe rotatif 3 et/ou, le cas échéant,
- une réduction de l'ouverture d'entrée 2b des produits dans l'espace de projection par un réglage approprié du moyen d'ouverture/fermeture 11.

Lorsque la machine agricole de distribution dispose d'un système de contrôle et d'acquisition de données 5, 6, 7, 8, et que l'unité de commande 7 est connectée à un ou plusieurs capteurs pouvant détecter les paramètres de fonctionnement de la machine agricole de distribution, son fonctionnement pourra être régulé même automatisé en fonction des signaux de moyens de mesure et de programmes de fonctionnement spécifiques au mode de distribution ou en fonction du type de produit à distribuer. De tels moyens de mesure sont par exemple des capteurs destinés à être implantés sur le système convoyeur et/ou démêleur 9, 10, sur le moyen d'ouverture/fermeture 11 et/ou sur d'autres organes présents sur la machine agricole de distribution. Les capteurs sont configurés pour détecter tout paramètre de fonctionnement approprié associé au fonctionnement de la machine agricole de distribution ou de l'un de ses organes, notamment le régime, la vitesse, le couple, la position, le débit ou la pression, une image etc.

Le système de contrôle et d'acquisition de données 5, 6, 7, 8 peut comprendre une alarme sonore et/ou une alarme visuelle. Une telle alarme peut être réalisée par l'interface de communication 8 adaptée à cet effet. L'alarme visuelle peut comprendre un ou plusieurs voyant(s) lumineux(x) ou des informations lumineuses s'affichant sur un écran. Une telle alarme peut être déclenchée par l'unité de contrôle 7 électronique en fonction du résultat du traitement des données liées à la rotation de l'organe rotatif 3, par exemple dans le cas d'un ralentissement anormal détecté.

La présente invention a également pour objet un ensemble machine agricole de distribution et véhicule tracteur, la machine agricole étant tractée par le véhicule tracteur comportant une cabine de conduite.

Toujours conformément à la présente invention, la machine agricole consiste en une machine agricole selon la présente invention et l'interface de communication 8 est montée, au moins en partie, dans la cabine de conduite du véhicule tracteur.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole de distribution de produits pour l'alimentation des animaux et/ou la formation de leur litière, la machine comprenant, d'une part, un caisson (1) délimitant intérieurement un espace de réception des produits, une turbine de distribution comprenant un carter (2) disposé sur un côté du caisson (1) et entourant un espace de projection (2a) des produits, le carter (2) comportant une ouverture d'entrée (2b) communiquant avec l'espace de réception et une ouverture de sortie (2c), et un organe rotatif (3) muni de pales (3a) et monté en rotation autour d'un axe de rotation (X) dans l'espace de projection (2a) de sorte à pouvoir générer dans ce dernier un flux d'air entraînant, avec le mouvement des pales (3a), les produits vers l'ouverture de sortie (2c) et, d'autre part, un arbre d'entraînement (4) de l'organe rotatif (3), un système convoyeur et/ou démêleur (9, 10) permettant d'acheminer les produits depuis l'espace de réception jusque dans l'espace de projection (2a) et, éventuellement, un moyen d'ouverture/fermeture (11) de l'ouverture d'entrée (2b), la machine agricole comprenant un boîtier de transmission et/ou de vitesse (12), la machine agricole étant **caractérisée en ce qu'**elle comprend un indicateur rotatif (5) disposé en dehors de l'espace de projection (2a) en étant apte à être entraîné en rotation, directement ou indirectement, par l'arbre d'entraînement (4) de sorte à transmettre à un utilisateur, par son propre effet visuel de rotation, une indication visuelle sur la rotation de l'organe rotatif (3) et **en ce que** l'indicateur rotatif (5) est disposé au niveau du boîtier de transmission et/ou de vitesse (12) en étant visible depuis l'extérieur du boîtier de transmission et/ou de vitesse (12).

2. Machine agricole de distribution, selon la revendication 1, **caractérisée en ce que** l'indicateur rotatif (5) est fixé sur l'arbre d'entraînement (4) de sorte à être entraîné en rotation autour de l'axe de rotation (X), de préférence en étant centré sur l'axe de rotation (X).

3. Machine agricole de distribution, selon la revendication 2, **caractérisée en ce que** l'indicateur rotatif (5) est fixé sur l'une des extrémités de l'arbre d'entraînement (4), dite extrémité de fixation (4b).

4. Machine agricole de distribution, selon la revendication 3, **caractérisée en ce que** l'arbre d'entraînement (4) comprend une première partie (4a) reliée à l'organe rotatif (3) et une deuxième partie (4b) comportant l'extrémité de fixation (40b) et **en ce que** le boîtier de transmission et/ou de vitesse (12) comprend un arbre de sortie formant la deuxième partie (4b) de l'arbre d'entraînement (4).

5. Machine agricole de distribution, selon l'une quelconque des revendications 1 à 4, **caractérisée en ce que** l'indicateur rotatif (5) présente une forme de disque comportant deux faces opposées dont l'une est visible de l'utilisateur et présente au moins deux marques distinctes, par exemple de deux couleurs différentes.

6. Machine agricole de distribution, selon l'une quelconque des revendications 1 à 4, **caractérisée en ce que** l'indicateur rotatif (5) présente une forme oblongue, ovale, non ronde, allongée, de losange, d'étoile ou d'aiguille.

7. Machine agricole de distribution, selon l'une quelconque des revendications 1 à 6, **caractérisée en ce qu'**elle comprend en outre un système de contrôle et d'acquisition de données (5, 6, 7, 8) liées à la rotation de l'organe rotatif (3), le système comprenant une interface de communication (8), des moyens de détection aptes à détecter les données et à délivrer des signaux représentatifs des données et une unité de contrôle (7) électronique apte à traiter les signaux et à transmettre à l'interface de communication (8) des informations relatives aux données pour les afficher de façon visuelle et/ou les restituer de façon sonore et/ou apte à traiter les signaux selon un programme de traitement spécifique permettant de déterminer si les données détectées sont représentatives d'un fonctionnement normal ou anormal de l'organe rotatif (3).

8. Machine agricole de distribution, selon la revendication 7, **caractérisée en ce que** les moyens de détection comprennent au moins un capteur (6) inductif, optique ou capacitif et au moins une cible (5) apte à être détectée par le capteur et étant fixée sur ou intégrée dans ou formée par l'organe rotatif (3) ou l'arbre d'entraînement (4) ou l'indicateur rotatif (5).

9. Machine agricole de distribution, selon l'une quelconque des revendications 7 à 8, **caractérisée en ce que** l'interface de communication (8) comprend au moins un écran tactile permettant d'afficher de façon visuelle les informations liées aux données détectées et/ou au traitement spécifique et, permettant, éventuellement avec un dispositif pointeur associé, une interaction entre l'utilisateur et le système de contrôle et d'acquisition de données (5, 6, 7, 8).

10. Machine agricole de distribution, selon l'une quelconque des revendications 7 à 9, **caractérisée en ce que**, dans le cas où les données détectées sont représentatives d'un fonctionnement anormal de la turbine, plus particulièrement de l'organe rotatif (3), le système de contrôle et d'acquisition de données (5, 6, 7, 8) est configuré pour pouvoir commander le système convoyeur et/ou démêleur (9, 10) et/ou l'organe rotatif (3) et/ou, le cas échéant, le moyen d'ouverture/fermeture (11), jusqu'à ce que les données détectées soient représentatives d'un fonctionnement normal de la turbine, plus particulièrement de l'organe rotatif (3).

11. Ensemble machine agricole de distribution et véhicule tracteur, la machine agricole étant tractée par le véhicule tracteur comportant une cabine de conduite, **caractérisé en ce que** la machine agricole consiste en une machine agricole selon l'une quelconque des revendications 7 à 10 et **en ce que** l'interface de communication (8) est montée, au moins en partie, dans la cabine de conduite du véhicule tracteur.

## Patentansprüche

1. Landwirtschaftliche Maschine zum Verteilen von Produkten für die Fütterung von Tieren und/oder die Bildung ihrer Einstreu, wobei die Maschine einerseits einen Kasten (1) umfasst, der im Inneren einen Aufnahmeraum für die Produkte begrenzt, eine Verteilungsturbine, die ein Gehäuse (2) umfasst, das an einer Seite des Kastens (1) angeordnet ist und einen Auswurfraum (2a) zum Auswerfen der Produkte umgibt, wobei das Gehäuse (2) eine mit dem Aufnahmeraum verbundene Einlassöffnung (2b) und eine Auslassöffnung (2c) aufweist, und ein Drehteil (3) mit Flügeln (3a), das um eine Drehachse (X) im Auswurfraum (2a) drehbar gelagert ist, um in diesem einen Luftstrom zu erzeugen, der mit der Bewegung der Flügel (3a) die Produkte zur Auslassöffnung (2c) befördert, und andererseits eine Antriebswelle (4) für das Drehteil (3), ein Förder- und/oder Entwirrungssystem (9, 10) zum Befördern der Produkte vom Aufnahmeraum in den Auswurfraum (2a) und gegebenenfalls eine Öffnungs-/Schließvorrichtung (11) für die Einlassöffnung (2b), wobei die landwirtschaftliche Maschine ein Getriebe- und/oder Geschwindigkeitsgehäuse (12) umfasst, wobei die landwirtschaftliche Maschine **dadurch gekennzeichnet ist, dass** sie eine Drehanzeige (5) umfasst, die außerhalb des Auswurfraums (2a) angeordnet ist und direkt oder indirekt von der Antriebswelle (4) in Drehung versetzt werden kann, um einem Benutzer durch ihre eigene visuelle Drehwirkung eine visuelle Anzeige über die Drehung des Drehteils (3) zu übermitteln, und dass die Drehanzeige (5) am Getriebe- und/oder Geschwindigkeitsgehäuse (12) angeordnet ist und von außerhalb des Getriebe- und/oder Geschwindigkeitsgehäuses (12) sichtbar ist.

2. Landwirtschaftliche Verteilungsmaschine nach Anspruch 1, **dadurch gekennzeichnet, dass** die Drehanzeige (5) so an der Antriebswelle (4) befestigt ist, dass sie um die Drehachse (X) gedreht wird, vorzugsweise zentriert auf der Drehachse (X).

3. Landwirtschaftliche Verteilungsmaschine nach Anspruch 2, **dadurch gekennzeichnet, dass** die Drehanzeige (5) an einem der Enden der Antriebswelle (4), dem sogenannten Befestigungsende (40b), befestigt ist.

4. Landwirtschaftliche Verteilungsmaschine nach Anspruch 3, **dadurch gekennzeichnet, dass** die Antriebswelle (4) einen ersten Teil (4a), der mit dem Drehteil (3) verbunden ist, und einen zweiten Teil (4b) umfasst, der das Befestigungsende (40b) aufweist, und dass das Getriebe- und/oder Geschwindigkeitsgehäuse (12) eine Abtriebswelle umfasst, die den zweiten Teil (4b) der Antriebswelle (4) bildet.

5. Landwirtschaftliche Verteilungsmaschine nach einem der Ansprüche 1 bis 4, **dadurch gekennzeichnet, dass** die Drehanzeige (5) die Form einer Scheibe mit zwei gegenüberliegenden Seiten hat, von denen eine für den Benutzer sichtbar ist und mindestens zwei unterschiedliche Markierungen aufweist, beispielszeise in zwei verschiedenen Farben.

6. Landwirtschaftliche Verteilungsmaschine nach einem der Ansprüche 1 bis 4, **dadurch gekennzeichnet, dass** die Drehanzeige (5) eine gestreckte, ovale, nicht runde, längliche, rautenförmige, sternförmige oder nadelförmige Form hat.

7. Landwirtschaftliche Verteilungsmaschine nach einem der Ansprüche 1 bis 6, **dadurch gekennzeichnet, dass** es außerdem ein System zur Steuerung und Erfassung von Daten (5, 6, 7, 8) umfasst, die mit der Drehung des Drehteils (3) zusammenhängen, wobei das System eine Kommunikationsschnittstelle (8), Erfassungsmittel, die in der Lage sind, die Daten zu erfassen und Signale zu liefern, die für die Daten repräsentativ sind, und eine elektronische Steuereinheit (7) umfasst, die in der Lage ist, die Signale zu verarbeiten und Informationen über die Daten an die Kommunikationsschnittstelle (8) zu übertragen, um sie visuell anzuzeigen und/oder akustisch wiederzugeben, und/oder die Signale gemäß einem spezifischen Verarbeitungsprogramm zu verarbeiten, mit dem bestimmt werden kann, ob die erfassten Daten für einen normalen oder abnormalen Betrieb des Drehteils (3) repräsentativ sind.

8. Landwirtschaftliche Verteilungsmaschine nach Anspruch 7, **dadurch gekennzeichnet, dass** die Erfassungsmittel mindestens einen induktiven, optischen oder kapazitiven Sensor (6) und mindestens ein Ziel (5) umfassen, das vom Sensor erfasst werden kann und an dem Drehteil (3) oder der Antriebswelle (4) oder der Drehanzeige (5) befestigt oder in diese integriert oder von diesen gebildet ist.

9. Landwirtschaftliche Verteilungsmaschine nach einem der Ansprüche 7 bis 8, **dadurch gekennzeichnet, dass** die Kommunikationsschnittstelle (8) mindestens einen Touchscreen umfasst, auf dem Informationen zu den erfassten Daten und/oder zur spezifischen Verarbeitung visuell angezeigt werden können und der, gegebenenfalls in Verbindung mit einem zugehörigen Zeigegerät, eine Interaktion zwischen dem Benutzer und dem System zur Steuerung und Erfassung von Daten (5, 6, 7, 8) ermöglicht.

10. Landwirtschaftliche Verteilungsmaschine nach einem der Ansprüche 7 bis 9, **dadurch gekennzeichnet, dass** für den Fall, dass die erfassten Daten auf eine Funktionsstörung der Turbine, insbesondere des Drehteils (3), hindeuten, das System zur Steuerung und Erfassung von Daten (5, 6, 7, 8) so konfiguriert ist, dass es das Förder- und/oder Entwirrungssystem (9, 10) und/oder das Drehteil (3) und/oder gegebenenfalls die Öffnungs-/Schließvorrichtung (11) steuern kann, bis die erfassten Daten einen normalen Betrieb der Turbine, insbesondere des Drehteils, anzeigen (3).

11. Kombination aus einer landwirtschaftliche Verteilungsmaschine und einem Zugfahrzeug, wobei die landwirtschaftliche Maschine von dem Zugfahrzeug gezogen wird, das eine Fahrerkabine aufweist, **dadurch gekennzeichnet, dass** die landwirtschaftliche Maschine aus einer landwirtschaftlichen Maschine nach einem der Ansprüche 7 bis 10 besteht und dass die Kommunikationsschnittstelle (8) zumindest teilweise in der Fahrerkabine des Zugfahrzeugs angebracht ist.

## Claims

1. Agricultural machine for distributing products for animal feeding and/or forming their straw bedding, the machine comprising, on one hand, a bin (1) delimiting an inner product receiving zone, a distribution blower comprising a casing (2) positioned on one side of the bin (1) and enclosing a product ejection zone (2a), the casing (2) comprising an inlet opening (2b) communicating with the receiving zone and an outlet opening (2c); and a rotary element (3) fitted with blades (3a) and mounted in rotation around a rotation axis (X) in the ejection zone (2a) to be able to generate in the ejection zone a flow of air, driving the products, with the motion of the blades (3a), towards the outlet opening (2c), and on another hand, a drive shaft (4) for the rotary element (3), a conveyor and/or unravelling system (9, 10) making it possible to transport the products from product receiving zone to the ejection zone (2a), and possibly an opening up/closing means (11) of the inlet opening (2b), the agricultural machine comprising a transmission and/or gearbox (12), the agricultural machine being **characterised in that** it comprises a rotary indicator (5) positioned outside the ejection zone (2a) and able to be driven in rotation directly or indirectly by the drive shaft (4) to send to a user, by its visual rotation effect a visual indication of the rotation of the rotary element (3) and **in that** the rotary element (5) is fitted at the location of the transmission and/or gearbox (12) and can be seen from the outside of the transmission and/or gearbox (12).

2. Agricultural distribution machine according to claim 1, **characterised in that** the rotary indicator (5) is fastened onto the drive shaft (4) to be driven in rotation around the rotation axis (X), being preferably centred on the rotation axis (X).

3. Agricultural distribution machine according to claim 2, **characterised in that** the rotary indicator (5) is fastened to one of the ends of the drive shaft (4), called fastening end (40b).

4. Agricultural distribution machine according to claim 3, **characterised in that** the drive shaft (4) comprises a first portion (4a) connected to the rotary element (3) and a second portion (4b) comprising the fastening end (40b), and wherein the transmission and/or gearbox (12) comprises an output shaft forming the second portion (4b) of the drive shaft (4).

5. Agricultural distribution machine according to any one of claims 1 to 4, **characterised in that** the rotary indicator (5) is disk-shaped with two opposite faces, one of which is visible to the user and has at least two distinct markings, for example two different colours.

6. Agricultural distribution machine according to any one of claims 1 to 4, **characterised in that** the rotary indicator (5) is oblong, oval, not round, elongated, diamond-, star- or needle-shaped.

7. Agricultural distribution machine according to any one of claims 1 to 6, **characterised in that** it also comprises a data control and collecting system (5, 6, 7, 8) related to the rotation of the rotary element (3), the system comprising a communication interface (8), sensors able to detect the data and deliver signals representative of the data, and an electronic monitoring unit (7) able to process the signals and transmit information relative to the data to the communication interface (8) to display it visually and/or render it as a sound and/or able to process the signals according to a specific processing program making it possible to determine whether the detected data is representative of normal or abnormal operation of the rotary element (3).

8. Agricultural distribution machine according to claim 7, **characterised in that** the sensors comprise at least one inductive, optical, or capacitive sensor (6) and at least one target (5) able to be detected by the sensor and fastened on, or built into, or formed by the rotary element (3) or the drive shaft (4) or the rotary indicator (5).

9. Agricultural distribution machine according to any one of claims 7 to 8, **characterised in that** the communication interface (8) comprises at least one touchscreen making it possible to visually display the information related to the detected data and/or the specific processing and enabling, possibly with a combined pointer device, an interaction between the user and the data control and collecting system (5, 6, 7, 8).

10. Agricultural distribution machine according to any one of claims 7 to 9, **characterised in that** where the detected data is representative of an abnormal operation of the blower, more specifically of the rotary element (3), the data control and collecting system (5, 6, 7, 8) is configured to be able to control the conveyor and/or unravelling system (9, 10) and/or the rotary element (3) and/or, where applicable, the opening up/closing means (11), until the detected data is representative of normal operation of the blower, more specifically of the rotary element (3).

11. Combination of an agricultural distribution machine and a tractor vehicle, the agricultural machine being towed by the tractor vehicle comprising a driver's cab, **characterised in that** the agricultural machine consists of an agricultural machine according to any one of claims 7 to 10 and **in that** the communication interface (8) is at least partly mounted in the driver's cab of the tractor vehicle.
